# EUROPÄISCHE PATENTSCHRIFT

(11) **EP 1 388 676 B1**
(45) Veröffentlichungstag und Bekanntmachung des Hinweises auf die Patenterteilung: **01.03.2006**
(21) Anmeldenummer: 03017517.8
(22) Anmeldetag: 05.08.2003
(51) Int. Cl.: F16B 25/00

(54) **Selbstfurchende Schraube**
Self-tapping screw
Vis auto-taraudeuse

(30) Priorität: 05.08.2002 DE 10235817
(43) Veröffentlichungstag der Anmeldung: 11.02.2004
(73) Patentinhaber: EJOT GmbH & Co. KG, 57334 Bad Laasphe (DE)
(72) Erfinder: Birkelbach, Ralf, 35041 Marburg (DE); Runkel, Dirk, 57334 Bad Laasphe (DE); Weigel, Gerd, 35713 Eschenburg (DE)
(74) Vertreter: Bardehle, Heinz

(56) Entgegenhaltungen:
- EP-A- 0 504 782
- EP-A- 0 589 398
- DE-A- 19 831 269
- FR-A- 1 483 931
- US-A- 3 794 092

## Beschreibung

Die Erfindung bezieht sich auf eine selbstfurchende Schraube, deren Gewindegänge in einem hinteren Bereich (dem Kopf zugewandt) einen im Wesentlichen zylindrischen Außendurchmesser besitzen und in einem vorderen Bereich (vom Kopf abgewandt) mit zum Schraubenende hin abnehmendem Außendurchmesser verlaufen.

Derartige selbstfurchende Schrauben sind in verschiedenen Ausführungsformen bekannt. So ist in dem deutschen Gebrauchsmuster 7 125 294 eine sog. Blechschraube offenbart, die über einen konischen Bereich in eine Gewindespitze ausläuft, durch die das Eindrehen der Blechschraube in ein Loch einer Blechplatte erleichtert wird, wobei die Gewindestruktur, abgesehen von einer geringeren Gewindesteigung in der Nähe des Schraubenkopfes, sich gleichbleibend über den Schraubenschaft und die Gewindespitze erstreckt. Eine ähnliche Gestaltung zeigt die deutsche Patentschrift 198 31 269, bei der lediglich im hinteren Bereich in der Nähe des Schraubenkopfes der Außendurchmesser des Gewindes vergrößert ist und in diesem Bereich der Gewindequerschnitt unsymmetrisch zur Radialen verläuft. Abgesehen von dieser sich über eine kurze Strecke des Gewindes erstreckenden Besonderheit ist die Gewindestruktur über den sonstigen Bereich der Schraube gleichbleibend. Außerdem sei noch auf die deutsche Offenlegungsschrift 28 53 976 verwiesen, die in ihrem hinteren Bereich durchgehend einen zylindrischen Außendurchmesser bei symmetrischem Gewindequerschnitt besitzt und in ihrem vorderen Bereich mit geringerem Grunddurchmesser und spitzem Auslauf ein Gewinde mit wesentlich geringerem Außendurchmesser und geringerer Gewindesteigung besitzt, wobei sich dieses Gewinde bis in das spitz auslaufende Gewindeende erstreckt.

Abgesehen von der vorstehend erwähnten Blechschraube sind die in den beiden anderen Druckschriften erwähnten Schrauben im Wesentlichen für das Eindrehen in Kunststoff gestaltet.

Eine weitere Gestaltung eines selbstfurchenden Gewindes ist in der US-PS 3,794,092 dargestellt. Die Figuren 11 und 12 dieser Patentschrift zeigen zwei Ausführungsformen einer Schraube, bei der ein vorderer Bereich A (preparation) und ein hinterer Bereich C (locking) vorgesehen ist, wobei sich die Querschnitte des Gewindes in beiden Bereichen wiederholen, aber dadurch unterscheiden, dass eine Beugung in den Gewindeflanken jeweils in entgegengesetzter Richtung verläuft. Beim Ausführungsbeispiel gemäß Figur 12 wird diese Beugung dadurch herbeigeführt, dass jeweils Last- und Rückflanke der Gewindegänge mit einem etwa in der Mitte der Gewindehöhe liegenden Knick versehen sind, und zwar derart, dass im vorderen Bereich (preparation) die Rückflanke ausgebeult und die Lastflanke eingedrückt erscheint, während im hinteren Bereich (locking) die Rückflanke eingedrückt ist und die Lastflanke ausgebeult erscheint. Es ergibt sich damit jeweils ein Gewindequerschnitt, der nur über die Hälfte der Gewindehöhe einen dreieckförmigen Querschnitt besitzt, während unterhalb davon im Bereich zwischen Knick und Gewindegrund eine Art trapezförmige Gestaltung vorliegt. Bei der Gestaltung gemäß Figur 11 der US-PS 3,794,092 liegen ähnliche Verhältnisse vor, allerdings verlaufen hier die Flanken nicht über einen Knick, sondern abgerundet im Sinne einer Ausbuchtung einer Einknickung, wie dies Figur 12 zeigt.

Der Erfindung liegt die Aufgabe zugrunde, eine Schraube zu schaffen, die für das Eindrehen in Blechmaterial geeignet ist und eine Gestaltung aufweist, durch die ein für das Eindrehen aus dem Blechmaterial heraugedrückter Durchzug entsteht, der sich im Wesentlichen in Eindrehrichtung konzentriert, d.h. auf die Seite des Blechmaterials, die dem Schraubenkopf abgewandt ist. Außerdem soll die Schraube nach ihrem Anziehen hohen Auszugskräften gewachsen sein. Erfindungsgemäß geschieht dies dadurch, dass die Gewindegänge sowohl im hinteren Bereich , wo die Gewindegänge mit bis zum zylindrischen Gewindegrund gerader Lastflanke versehen sind, als auch im vorderen Bereich , wo die Gewindegänge mit bis zum zylindrischen Gewindegrund gerader Rückflanke versehen sind, einen dreieckigen Querschnitt mit nach außen gerichteter zum axialen Kernverlauf schräg liegender Winkelhalbierenden des zwischen Lastflanke und Rückflanke gemessenen Flankenwinkels (α, γ) besitzen, der vom hinteren Bereich (erster Querschnitt) zum vorderen Bereich (zweiter Querschnitt) sich umkehrt, wobei die nach außen gerichtete Winkelhalbierende im vorderen Bereich zum Schraubenkopf hin und im hinteren Bereich vom Schraubenkopf weg geneigt ist und die Umkehrstelle des Gewindequerschnitts derart gelegt ist, dass der erste Querschnitt im Wesentlichen im hinteren Bereich, der zweite Querschnitt im Wesentlichen im vorderen Bereich vorhanden ist, und dass im hinteren Bereich die Rückflanke und im vorderen Bereich die Lastflanke jeweils vom Außendurchmesser zum zylindrischen Gewindegrund über einen Knick zu einem größeren Flankenwinkel (δ) verläuft.

Aufgrund der geneigt, also schräg liegenden Winkelhalbierenden ergibt sich eine entsprechende Schräglage der Gewindegänge, die im vorderen Bereich zum Schraubenkopf hin geneigt liegen und daher mit ihrer großflächigeren Rückflanke (dem Schraubenkopf abgewandt) beim Eindrehen der Schraube einen besonders hohen axial gerichteten Druck auf das Blechmaterial ausüben und daher mit dieser Rückflanke mehr Blechmaterial in Einschraubrichtung verdrängen als mit ihrer Lastflanke (dem Schraubenkopf zugewandt). Dies hat zur Folge, dass der dabei entstehende Durchzug (Blechwulst) im Wesentlichen beim Eindrehen der Schraube vor deren Gewindegängen hergeschoben wird und dementsprechend im Wesentlichen auf der dem Schraubenkopf abgewandten Seite des Blechmaterials erscheint. Es bleibt demgemäss, wenn überhaupt, auf der anderen Seite des Blechmaterials nur wenig verdrängtes Material übrig, das zu einem Durchzug auf dieser Seite des Blechmaterials führen kann. Da im hinteren Bereich der Schraube der Querschnitt der Gewindegänge umgekehrt verläuft wie im vorderen Bereich, also die Winkelhalbierende der Gewindegänge im hinteren Bereich vom Schraubenkopf abgewandt ist, können sich die Gewindegänge im hinteren Bereich mit ihrer hier gegenüber der Rückflanke flacheren und damit großflächigeren Lastflanke besonders gut gegen das Blechmaterial abstützen, womit sich für die eingedrehte Schraube besonders hohe Auszugskräfte ergeben. Aufgrund der Umkehr des Querschnitts der Gewindegänge ergibt sich also jeweils im vorderen und hinteren Bereich jeweils ein umgekehrter Verdrängungseffekt bezüglich des Blechmaterials, was einerseits die erwünschte Gestaltung des Durchzugs ermöglicht und andererseits die Schraube vorteilhaft mit hohen Auszugskräften ausstattet.

Durch den Knick in der Rückflanke im hinteren Bereich und in der Lastflanke im vorderen Bereich, der an dem dreieckigen Querschnitt der Gewindegänge nichts ändert, ergibt sich eine den Gewindegängen gegebene besonders hohe Stabilität.

Zweckmäßig gestaltet man die Gewindegänge in beiden Bereichen so, dass die Winkelhalbierende in beiden Bereichen um etwa 82° zum axialen Kernverlauf geneigt ist. Im Gegensatz dazu beträgt bei einem normalen symmetrischen Gewinde der Winkel zwischen Winkelhalbierender und dem axialen Kernverlauf 90°.

Die Umkehrstelle des Gewindequerschnitts kann man an verschiedene Stellen der Schraube legen, insbesondere an den Übergang vom hinteren Bereich zum vorderen Bereich. Es ist aber auch möglich, die Umkehrstelle vor dem Übergang vom hinteren Bereich zum vorderen Bereich oder nach dem Übergang vom hinteren Bereich zum vorderen Bereich zu legen.

Zweckmäßig gestaltet man die Schraube so, dass der erste Querschnitt spiegelbildlich zum zweiten Querschnitt verläuft. Eine vorteilhafte Gestaltung der geknickten Gewindeflanke ergibt sich dann, wenn deren Flankenwinkel etwa 70° im Bereich zwischen Gewindegrund und Knick und im Bereich zwischen Knick und Gewindespitze etwa 45° beträgt.

Zweckmäßig gestaltet man das Gewinde so, dass der an den Gewindespitzen gemessene Flankenwinkel in beiden Bereichen gleich ist und bei etwa 45° liegt.

Um unterschiedlichen Beanspruchungen der Schraube im vorderen und hinteren Bereich entgegenwirken zu können, kann man die Schraube so gestalten, dass der an den Gewindespitzen gemessene Flankenwinkel im vorderen Bereich größer ist als im hinteren Bereich. In diesem Falle ergibt sich ein besonders intensives Vorsichherschieben des Blechmaterials vor der eingedrehten Schraube her und damit praktisch nur ein Durchzug auf der dem Schraubenkopf abgewandten Seite des Blechmaterials. Dabei wird zweckmäßig das Gewinde so gestaltet, dass in beiden Bereichen die Gewindegänge spitz auslaufen. Um dabei im vorderen Bereich das Einfurchen des Gewindes in ein Mutterstück zu erleichtern, gestaltet man zweckmäßig den Gewindeverlauf so, dass im Bereich der Umkehrstelle einzelne Gewindespitzen über einen Umfangswinkel von etwa > 90° abgeflacht verlaufen.

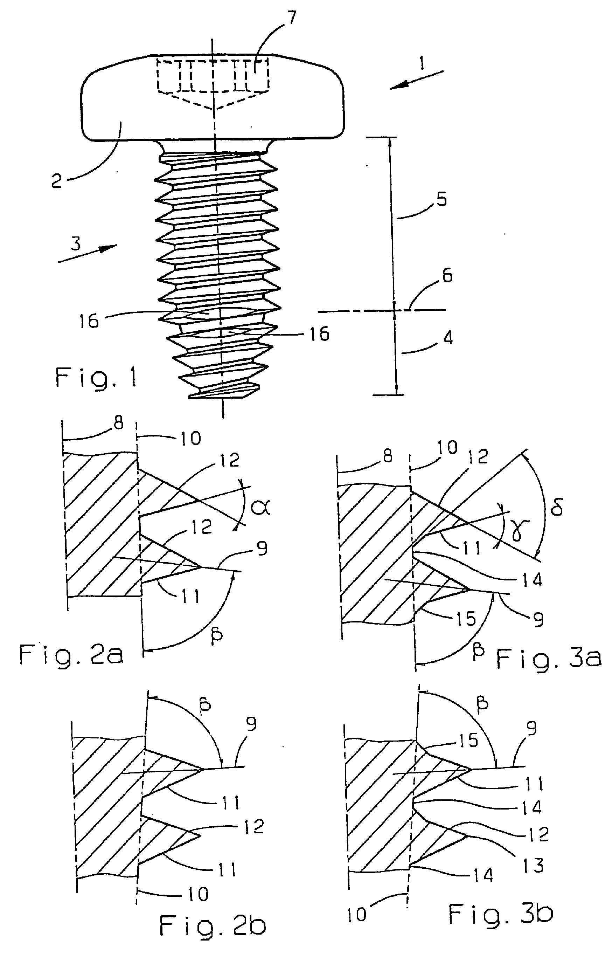

In den Figuren sind Schraubengestaltungen dargestellt, die zur Erläuterung der nur in Figur 3a und 3b abgebildeten erfindungsgemäßen Schraube dienen. Es zeigen:
- Figur 1: eine mit dem unsymmetrisch verlaufenden Gewinde gestaltete, selbstfurchende Schraube;
- Figuren 2a und b: eine schematische Darstellung des Gewindeverlaufs im hinteren und vorderen Bereich auf der Grundlage eines Gewindes, bei dem die Lastflanke und die Rückflanke gradlinig verlaufen;
- Figuren 3a und b: in schematischer Darstellung den Gewindeverlauf, bei dem in die Rückflanke bzw. die Lastflanke jeweils ein Knick gelegt ist.

In der Figur 1 ist die mit dem unsymmetrisch verlaufenden Gewinde versehene Schraube 1 dargestellt, die den Schraubenkopf 2 und den Gewindeschaft 3 aufweist. Der Gewindeschaft 3 enthält den vom Kopf 2 abgewandten vorderen Bereich 4 und den dem Kopf zugewandten hinteren Bereich 5, die beide an der mit 6 bezeichneten Umkehrstelle aufeinander treffen. Im hinteren Bereich 5 verläuft das Gewinde mit im Wesentlichen zylindrischem Außendurchmesser, während im vorderen Bereich 4 der Außendurchmesser des Gewindes abnimmt, so dass also hier im Effekt eine Art konischer Gewindeverlauf vorliegt.

Sowohl im hinteren Bereich 5 als auch im vorderen Bereich 4 besitzt das Gewinde hinsichtlich seines Querschnitts eine Unsymmetrie, die sich darin äußert, dass im hinteren Bereich 5 das Gewinde gewissermaßen vom Kopf 2 weggeneigt ist, während es im vorderen Bereich 4 zum Kopf 2 hin geneigt ist. Diese Gewindeneigung ist in den schematischen Darstellungen gemäß den Figuren 2a und b sowie 3a und b im Einzelnen deutlich herausgestellt.

Die Besonderheit der in Figur 1 dargestellten Schraube besteht darin, dass der Querschnitt des Gewindes im hinteren Bereich 5 und im vorderen Bereich 4 sich umkehrt und zwar derart, dass im hinteren Bereich 5 das Gewinde mit seinem Querschnitt vom Kopf 2 weggeneigt und im vorderen Bereich 4 zum Kopf 2 hingeneigt erscheint. Diese Neigung wird unter Zugrundelegung der jeweiligen Flankenwinkel anhand der Figuren 2a und b sowie 3a und b weiter unten näher erläutert.

Die in der Figur 1 dargestellte Schraube 1 wird bei ihrer bevorzugten Verwendung in relativ dünnes Metallblech eingeschraubt, z.B. Stahlblech oder Aluminiumblech. Bei einem Außendurchmesser einer verwendeten Schraube von 4 mm wird diese Schraube zweckmäßig in derartige Bleche eingeschraubt, die eine Dicke von etwa 1 mm bei Aluminiumblech und 0,8 mm bei Stahlblech besitzen. Das Blech muss hierzu ein Loch aufweisen, in das die Schraube mit ihrem geringsten Außendurchmesser am vorderen Ende des vorderen Bereichs 4 gerade hinein passt.

Beim Eindrehen der Schraube 1 ergibt sich das Furchen des Gewindes in das Blechmaterial aufgrund der Wirkung des vorderen Bereichs 4, das in dem Loch der Schraube ansetzt und mit seinem relativ geringen Außendurchmesser das Einfurchen des Gewindes beginnt. Dabei drückt das Gewinde des vorderen Bereichs 4 mit der gegenüber der Lastflanke (dem Kopf zugewandt) großflächigeren Rückflanke (vom Kopf abgewandt) mehr auf das Material des Blechs und schiebt dabei also mit der Rückflanke besonders viel Blechmaterial vor sich her, das dann zu der erwünschten Ausbildung des Durchzugs (Blechwulst) auf der Seite des Blechs führt, die dem Schraubenkopf 2 abgewandt ist. Im Bereich der Umkehrstelle 6 besitzen verschiedene Gewindegänge die Abflachungen 16, die das Einfurchen des Gewindes im Blech erleichtern.

Es sei noch darauf hingewiesen, dass in den Schraubenkopf 2 ein Schraubenantrieb 7, hier ein Torx, eingedrückt ist, durch den das Drehmoment für das Einfurchen der Schraube übertragen wird.

In den Figuren 2a und b ist in schematischer Darstellung das Gewinde des Schraubenschaftes 3 gemäß Figur 1 im Querschnitt dargestellt, und zwar einseitig neben der die Schraube durchsetzenden Mittellinie 8.

Bei der Figur 2a handelt es sich um den hinteren Bereich 5, in dem die Gewindegänge vom Schraubenkopf abgewandt dargestellt sind. Der Flankenwinkel α des Gewindes im hinteren Bereich 5 beträgt hier 45°. Außerdem ist in der Figur 2a bezüglich eines Gewindeganges die Winkelhalbierende 9 des Winkels α eingezeichnet, die zu dem axialen Kernverlauf gemäß der Linie 10 im Winkel β verläuft, der hier bei 82° liegt.

In der Figur 2b ist der vordere Bereich 4 des Gewindes des Gewindeschaftes 3 gemäß Figur 1 dargestellt, der prinzipiell dem Querschnitt des Gewindes im hinteren Bereich 5 gemäß Figur 2a entspricht, allerdings aufgrund des in Axialrichtung sich verringernden Außendurchmessers gewissermaßen konisch, wobei allerdings der Winkel der Winkelhalbierenden 9 in der Figur 2b gleich dem Winkel β in der Figur 2a ist, weil nämlich dieser Winkel in jedem Falle gegenüber dem axialen Kernverlauf 10 festgelegt ist, der im vorderen Bereich 4 konisch verläuft. Der Flankenwinkel α im vorderen Bereich 4 ist gleich dem Winkel α im hinteren Bereich. Bei Anwendung auf besonders dünnem Blech kann der Flankenwinkel α im vorderen Bereich 4 auch größer gewählt werden, und zwar mit flacherem Verlauf der Rückflanke. Dies gilt auch für das Gewinde gemäß Figuren 3a und b.

Die besondere Wirkungsweise des anhand der Figuren 2a und b dargestellten Gewindes sei nachstehend nochmals erläutert: Mit der Rückflanke 11 des Gewindes im vorderen Bereich 4 wird wesentlich mehr Material beim Eindrehen der Schraube in Blech in Axialrichtung vom Schraubenkopf 2 weg verdrängt als mit der Lastflanke 12, die auf das Material des Blechs wegen ihrer kleineren Oberfläche schwächer einwirkt als die Rückflanke 11. Infolgedessen schiebt die Rückflanke 11 mehr Material aus dem Blech vor sich her als die Lastflanke 12. Die Lastflanke 12 hat aber auf die Schraube 1 einwirkenden Auszugskräften zu widerstehen, was der hintere Bereich 5 auszuhalten hat, in dem die dortige Lastflanke 12 großflächiger ausgebildet ist als die Rückflanke 11. Infolgedessen ist die Schraube, wenn sie mit ihrem hinteren Bereich in das Blechmaterial eingedreht ist, besonders widerstandsfähig gegenüber Auszugskräften.

In den Figuren 3a und 3b ist eine Abwandlung des Gewindequerschnitts gegenüber den Gewinden gemäß Figuren 1 und 2a und b dargestellt. Während bei dem Gewinde gemäß den Figuren 2a und b sowohl die Lastflanke 12 als auch die Rückflanke 11 gradlinig verlaufen, ist bei dem Gewinde gemäß den Figuren 3a und 3b jeweils in einer Flanke ein Knick 15 vorhanden, und zwar verläuft die Flanke mit dem Knick 15 von Außendurchmesser (Gewindespitze 13) zum Kern (Gewindegrund 14) derart, dass der Flankenwinkel von der Gewindespitze 13 ab zunächst mit kleinerem und nach dem Knick 15 mit größerem Winkel verläuft. In der Figur 3a ist der kleinere (äußere) Flankenwinkel mit γ und der größere (innere) Flankenwinkel mit δ bezeichnet. Bei dem dargestellten Ausführungsbeispiel beträgt der Winkel γ 45° und der Winkel δ 70°. Die Winkelhalbierende 9 ist hier auf den Winkel γ bezogen. Der Knick 15 liegt hier bei 30 % der Gewindehöhe.

Aufgrund des Knicks 15, dem in Richtung Kern (Gewindegrund 10) ein größerer Flankenwinkel folgt, ergibt sich bei Belastung der jeweils gegenüberliegenden Gewindeflanke eine besonders günstige Abstützung jedes Gewindeganges, der aufgrund dieses Gewindeverlaufes gewissermaßen gegen Verbiegen bzw. Abscheren besonders gesichert ist. Diese Belastung hat der vordere Bereich 4 beim Eindrehen der Schraube auszuhalten, da nämlich in diesem Falle die dortige Rückflanke 11 das Gewinde in ein Blech einzufurchen und damit das Material vor sich herzuschieben hat. Im hinteren Bereich 5 wird dagegen die Lastflanke 12 aufgrund von auftretenden Auszugskräften belastet, die dabei in Richtung vom Schraubenkopf weg hin gewissermaßen gebogen wird, wogegen sich jeder Gewindegang dann über die auf der anderen Seite angeordnete abgeknickte Rückflanke besonders günstig abstützen kann. Das mit dem Knick 15 versehene Gewinde ist also gegenüber hohen Auszugskräften besonders widerstandsfähig.

## Patentansprüche

1. Selbstfurchende Schraube (1), deren Gewindegänge in einem hinteren Bereich (5) (dem Kopf zugewandt) einen im Wesentlichen zylindrischen Außendurchmesser besitzen und in einem vorderen Bereich (4) (vom Kopf abgewandt) mit zum Schraubenende hin abnehmendem Außendurchmesser verlaufen, **dadurch gekennzeichnet, dass** die Gewindegänge sowohl im hinteren Bereich (5), wo die Gewindegänge mit bis zum zylindrischen Gewindegrund (14) gerader Lastflanke (12) versehen sind, als auch im vorderen Bereich (4), wo die Gewindegänge mit bis zum zylindrischen Gewindegrund (14) gerader Rückflanke (11) versehen sind, einen dreieckigen Querschnitt mit nach außen gerichteter zum axialen Kernverlauf schräg liegender Winkelhalbierenden (9) des zwischen Lastflanke (12) und Rückflanke (11) gemessenen Flankenwinkels (α, γ) besitzen, der vom hinteren Bereich (5) (erster Querschnitt) zum vorderen Bereich (4) (zweiter Querschnitt) sich umkehrt, wobei die nach außen gerichtete Winkelhalbierende (9) im vorderen Bereich (4) zum Schraubenkopf (2) hin und im hinteren Bereich (5) vom Schraubenkopf (2) weg geneigt ist und die Umkehrstelle (6) des Gewindequerschnitts derart gelegt ist, dass der erste Querschnitt im Wesentlichen im hinteren Bereich (5), der zweite Querschnitt im Wesentlichen im vorderen Bereich (4) vorhanden ist, und dass im hinteren Bereich (5) die Rückflanke (11) und im vorderen Bereich (4) die Lastflanke (12) jeweils vom Außendurchmesser zum zylindrischen Gewindegrund (14) über einen Knick (15) zu einem größeren Flankenwinkel (δ) verläuft.

2. Schraube nach Anspruch 1, **dadurch gekennzeichnet, dass** die Winkelhalbierende (9) in beiden Bereichen (4, 5) um etwa 82° zum axialen Kernverlauf (10) geneigt ist.

3. Schraube nach Anspruch 1 oder 2, **dadurch gekennzeichnet, dass** die Umkehrstelle (6) des Gewindequerschnitts am Übergang vom hinteren Bereich (5) zum vorderen Bereich (4) liegt.

4. Schraube nach Anspruch 1 oder 2, **dadurch gekennzeichnet, dass** die Umkehrstelle (6) des Gewindequerschnitts vor dem Übergang vom hinteren Bereich (5) zum vorderen Bereich (4) liegt.

5. Schraube nach Anspruch 1 oder 2, **dadurch gekennzeichnet, dass** die Umkehrstelle (6) des Gewindequerschnitts nach dem Übergang vom hinteren Bereich (5) zum vorderen Bereich (4) liegt.

6. Schraube nach einem der Ansprüche 1 bis 5, **dadurch gekennzeichnet, dass** der erste Querschnitt spiegelbildlich zum zweiten Querschnitt verläuft.

7. Schraube nach einem der Ansprüche 1 bis 6, **dadurch gekennzeichnet, dass** der Flankenwinkel δ der geknickten Gewindeflanke etwa 70° im Bereich zwischen Gewindegrund (14) und Knick (15) beträgt und etwa 45° im Bereich zwischen Knick (15) und Gewindespitze (13) beträgt.

8. Schraube nach einem der Ansprüche 1 bis 7, **dadurch gekennzeichnet, dass** der an den Gewindespitzen (13) gemessene Flankenwinkel (α, γ) in beiden Bereichen gleich ist und bei etwa 45° liegt.

9. Schraube nach einem der Ansprüche 1 bis 8, **dadurch gekennzeichnet, dass** der an den Gewindespitzen (13) gemessene Flankenwinkel (α, γ) im vorderen Bereich (4) größer ist als im hinteren Bereich (5).

10. Schraube nach einem der Ansprüche 1 bis 9, **dadurch gekennzeichnet, dass** in beiden Bereichen die Gewindegänge spitz auslaufen.

11. Schraube nach einem der Ansprüche 1 bis 10, **dadurch gekennzeichnet, dass** im Bereich der Umkehrstelle (6) einzelne Gewindespitzen über einen Umfangswinkel von etwa >90° abgeflacht (16) verlaufen.

## Claims

1. Thread-foming screw (1), the threads of which have a substantially cylindrical outer diameter in a rear region (5) (directed towards the head) and an outer diameter decreasing towards the end of the screw in a front region (4) (directed away from the head), **characterised in that**, both in the rear region (5) in which the threads are provided with a load flank (12) extending rectilinearly to the cylindrical thread root (14) and in the front region (4) in which the threads are provided with a rear flank (11) extending rectilinearly to the cylindrical thread root (14), the threads have a triangular cross section with an outwardly directed bisector (9) of the flank angle (α, γ) measured between the load flank (12) and the rear flank (11) inclined relative to the axial course of the core which reverses from the rear region (5) (first cross section) to the front region (4) (second cross section), the outwardly directed angle bisector (9) being inclined towards the screw head (2) in the front region (4) and away from the screw head (2) in the rear region (5) and the reversal point (6) of the thread cross section being positioned in such a manner that the first cross section is present substantially in the rear region (5) and the second cross section substantially in the front region (4), and that, in the rear region (5), the rear flank (11) and, in the front region (4), the load flank (12) each extend from the outer diameter to the cylindrical thread root (14) over a bend (15) at a greater flank angle (δ).

2. Screw according to claim 1, **characterised in that** the angle bisector (9) is inclined at an angle of approximately 82° relative to the axial course (10) of the core in both regions (4, 5).

3. Screw according to claim 1 or claim 2, **characterised in that** the reversal point (6) of the thread cross section is situated at the transition from the rear region (5) to the front region (4).

4. Screw according to claim 1 or claim 2, **characterised in that** the reversal point (6) of the thread cross section is situated in front of the transition from the rear region (5) to the front region (4).

5. Screw according to claim 1 or claim 2, **characterised in that** the reversal point (6) of the thread cross section is situated behind the transition from the rear region (5) to the front region (4).

6. Screw according to one of claims 1 to 5, **characterised in that** the first cross section extends symmetrically relative to the second cross section.

7. Screw according to one of claims 1 to 6, **characterised in that** the flank angle (δ) of the bent thread flank is approximately 70° in the region between the thread root (14) and the bend (15) and approximately 45° in the region between the bend (15) and the thread crest (13).

8. Screw according to one of claims 1 to 7, **characterised in that** the flank angle (α, γ) measured at the thread crests (13) is equal in both regions and is approximately 45°.

9. Screw according to one of claims 1 to 8. **characterised in that** the flank angle (α, γ) measured at the thread crests (13) is greater in the front region (4) than in the rear region (5).

10. Screw according to one of claims 1 to 9, **characterised in that** the threads taper in both regions.

11. Screw according to one of claims 1 to 10, **characterised in that** individual thread crests extend in a flattened (16) manner over a circumferential angle of approximately > 90° in the region of the reversal point (6).

## Revendications

1. Vis auto-taraudeuse (1), dont les pas de vis possèdent dans une zone arrière (5) (orientée vers la tête) un diamètre extérieur sensiblement cylindrique, et s'étendent dans une zone avant (4) (opposée à la tête) avec un diamètre extérieur se réduisant vers l'extrémité de la vis, **caractérisée en ce que,** aussi bien dans la zone arrière (5), où les pas de vis sont munis d'un flanc de charge (12) droit jusqu'au fond de filet cylindrique (14), que dans la zone avant (4), où les pas de vis sont munis d'un flanc arrière (11) droit jusqu'au fond de filet cylindrique (14), les pas de vis possèdent une section transversale triangulaire avec une bissectrice (9) orientée vers l'extérieur, située obliquement en direction de l'extension axiale de noyau, de l'angle de flanc (α, γ) mesuré entre le flanc de charge (12) et le flanc arrière (11), qui s'inverse entre la zone arrière (5) (première section transversale) et la zone avant (4) (deuxième section transversale), la bissectrice (9) orientée vers l'extérieur étant inclinée, dans la zone avant (4) vers la tête (2) de vis et dans la zone arrière (5) à l'opposé de la tête (2) de vis, et le point d'inversion (6) de la section transversale du filetage étant situé de telle sorte que la première section transversale soit sensiblement prévue dans la zone arrière (5), et la deuxième section transversale sensiblement dans la zone avant (4), et que, dans la zone arrière (5) le flanc arrière (11), et dans la zone avant (4) le flanc de charge (12), s'étendent respectivement du diamètre extérieur vers le fond de filet cylindrique (14) sur un angle de flanc (δ) plus important par l'intermédiaire d'une inflexion (15).

2. Vis selon la revendication 1, **caractérisée en ce que**, dans les deux zones (4, 5), la bissectrice (9) est inclinée de l'ordre de 82° vers l'extension axiale de noyau (10).

3. Vis selon la revendication 1 ou 2, **caractérisée en ce que** le point d'inversion (6) de la section transversale du filetage est situé au niveau de la transition entre la zone arrière (5) et la zone avant (4).

4. vis selon la revendication 1 ou 2, **caractérisée en ce que** le point d'inversion (6) de la section transversale du filetage est situé en amont de la transition entre la zone arrière (5) et la zone avant (4).

5. Vis selon la revendication 1 ou 2, **caractérisée en ce que** le point d'inversion (6) de la section transversale du filetage est situé en aval de la transition entre la zone arrière (5) et la zone avant (4).

6. Vis selon l'une quelconque des revendications 1 à 5, **caractérisée en ce que** la première section transversale s'étend symétriquement par rapport à la deuxième section transversale.

7. Vis selon l'une quelconque des revendications 1 à 6, **caractérisée en ce que** l'angle de flanc δ du flanc de filet infléchi est de l'ordre de 70° dans la zone située entre le fond de filet (14) et l'inflexion (15), et de l'ordre de 45° dans la zone située entre l'inflexion (15) et le sommet de filet (13).

8. Vis selon l'une quelconque des revendications 1 à 7, **caractérisée en ce que** l'angle de flanc (α, γ) mesuré au niveau des sommets de filet (13) est identique dans les deux zones, et se situe aux environs de 45°.

9. Vis selon l'une quelconque des revendications 1 à 8, **caractérisée en ce que** l'angle de flanc (α, γ) mesuré au niveau des sommets de filet (13) est plus important dans la zone avant (4) que dans la zone arrière (5).

10. Vis selon l'une quelconque des revendications 1 à 9, **caractérisée en ce que**, dans les deux zones, les pas de vis se terminent en pointe.

11. Vis selon l'une quelconque des revendications 1 à 10, **caractérisée en ce que**, dans la zone du point d'inversion (6), des sommets de filet individuels s'étendent de façon aplatie (16) sur un angle périphérique > 90° environ.
